# EUROPÄISCHE PATENTSCHRIFT

(11) **EP 0 603 527 B1**
(45) Veröffentlichungstag und Bekanntmachung des Hinweises auf die Patenterteilung: **10.04.1996**
(21) Anmeldenummer: 93118191.1
(22) Anmeldetag: 10.11.1993
(51) Int. Cl.: H02N 2/00

(54) **Schwingungsmotor**
Vibration motor
Moteur à vibrations

(30) Priorität: 21.12.1992 DE 4243323
(43) Veröffentlichungstag der Anmeldung: 29.06.1994
(73) Patentinhaber: DAIMLER-BENZ AKTIENGESELLSCHAFT, D-70567 Stuttgart (DE)
(72) Erfinder: Schöner, Hans-Peter, Dr.-Ing., D-64397 Modautal (DE); Schreiner, Michael, Dipl.-Phys., D-63165 Mühlheim/Main (DE); Schwarz, Axel, D-35396 Giessen (DE)
(74) Vertreter: Vogl, Leo, Dipl.-Ing.

(56) Entgegenhaltungen:
- DE-A- 3 835 090
- US-A- 4 692 650
- US-A- 5 034 646
- US-A- 5 049 774
- PATENT ABSTRACTS OF JAPAN, unexamined applications, E Field, Band 16, Nr. 521, 27. Oktober 1992, THE PATENT OFFICE JAPANESE GOVERNMENT Seite 10 E 1285; & JP-A-4-193 079 (NIKON)
- PATENT ABSTRACTS OF JAPAN, unexamined applications, E Field, Band 12, Nr. 200, 9. Juni 1988 THE PATENT OFFICE JAPANESE GOVERNMENT Seite 161 E 619; & JP-A-63-1 381

## Beschreibung

Die Erfindung betrifft einen Schwingungsmotor gemäß dem Oberbegriff des Patentanspruchs 1.

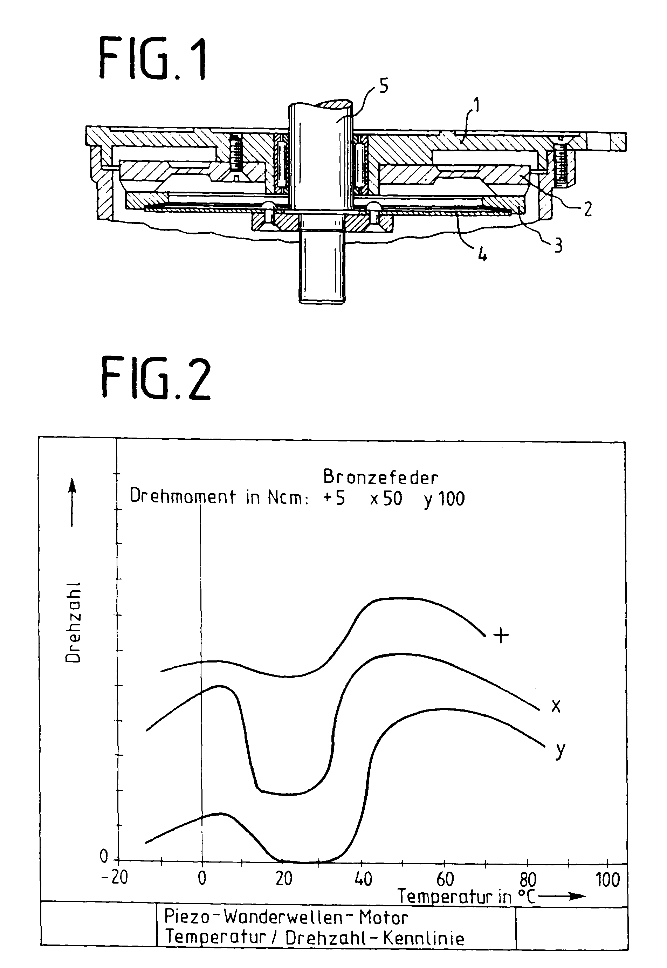

Schwingungsmotoren, bei denen ein motorischer Antrieb durch auf der Oberfläche geeigneter Schwingkörper erzeugte Wanderwellen erfolgt, besitzen eine Reihe vorteilhafter Eigenschaften, wie z.B. hohes Halte- und Drehmoment, niedrige Geschwindigkeit, kompakte flache Bauweise, und sind z.B. bekannt vom 24. Technischen Pressekolloquium der AEG, 26./27. Oktober 1989. Ein Besispiel eines solchen Schwingungsmotors zeigt Figur 1 . Bei einem solchen Motor wird ein Rotor mittels eines Anpreßmechanismus gegen einen Schwingstator gedrückt, in dem durch Ultraschallschwinger, z.B. Piezo-Elemente, Wanderwellen angeregt werden.

Ein Nachteil bekannter Schwingungsmotoren ist u.a. die Temperatur- abhängigkeit der Drehzahl bei konstantem Drehmoment. Wie aus Figur 2 zu ersehen ist, tritt in einem Temperaturbereich zwischen 20 und 30°C in der Drehzahlkennlinie ein Einbruch auf. In diesem Bereich findet sich auch eine gegenüber den anderen Bereichen höhere Geräuschentwicklung. Der Drehzahleinbruch kann, wie ebenfalls aus Figur 2 ersichtlich ist, bei höherem Drehmoment zu einem Absinken der Drehzahl bis auf den Wert 0 führen. Auch wenn sich üblicherweise die Betriebstemperatur des Motors nach der Anlaufphase auf einen Wert außerhalb des angegebenen schlechten Bereichs erhöht, ist die Kraftübertragung von Stator auf Rotor zumindest zeitweise gestört, was insbesondere in der Startphase unter Last eine Einschränkung der Leistungsfähigkeit des Motors zur Folge hat. Darüberhinaus führt die gestörte Kraftübertragung zu einem erhöhten Verschleiß des Motors im Kontaktbereich von Stator und Rotor, da in Stator- und Rotoroberfläche die Geschwindigkeitskomponenten stark voneinander abweichen.

Die Spektralanalyse der Störgeräusche im Temperaturbereich des Drehzahleinbruchs bekannter Schwingungsmotore zeigt Resonanzen bei Subharmonischen der Anregefrequenz f₀, mit der im Stator die Wanderwellen angeregt werden. Diese Resonanzen werden durch die üblichen Dämpfungsmaßnahmen, z. B. Gummi- oder Filzringe, die zwischen Stator und Statorlagerung angeordnet sind, nicht wirksam unterdrückt.

Aus dem Dokument DE-A-38 35 090 ist bereits bekannt, die Ausgangsfrequenz des Antriebsstromkreises eines Schwingmotors so zu steuern, daß sie dauernd der mechanischen Resonanzfrequenz und der Antriebsfrequenz folgt, um damit den Stillstand des Schwingungsmotors durch Temperaturänderungen zu verhindern. Um die Schwingungen eines bewegten Elements und Geräuschbildung zu unterdrücken, ist bereits aus dem Dokument Patent Abstracts of Japan, E. Field, Bd. 12, Nr. 200, S. 161 E 619, Nr. 63-1381, bekannt, bei dem bewegten Element eine schwingungsabsorbierende Schicht vorzusehen. Aus dem Dokument US-A-4,692,650 ist bereits bekannt, bei einem Vibrationsmotor eine Kontaktschicht aus thermoplastischem synthetischem Harz vorzusehen.

Der Erfindung liegt die Aufgabe zugrunde, bei einem Schwingungsmotor parasitäre Schwingungen zu vermeiden und einen Motor zu schaffen, dessen Drehzahlkennlinie in einem weiten Bereich der Betriebstemperatur keine Einbrüche aufweist und der auch in diesem Temperaturbereich geräuscharm arbeitet. Diese Aufgabe wird durch die in Patentanspruch 1 gekennzeichnete Erfindung gelöst. Vorteilhafte Ausgestaltungen der Erfindung sind in den Unteransprüchen und der Beschreibung zu entnehmen. Dadurch, daß das System Rotor/Andruckmechanismus nahe dem aperiodischen Grenzfall betrieben wird, werden parasitäre Schwingungen vermieden.

Die Erfindung wird anhand von Abbildungen beispielhaft im folgenden näher beschrieben. Es zeigt
- Fig. 1: einen Schnitt durch das Gehäuse eines Schwingungsmotors mit Stator, Rotor und Andruckmechanismus,
- Fig. 2: eine Darstellung der Drehzahlkennlinie eines bekannten Schwingungsmotors,
- Fig. 3: eine schematische Darstellung der wesentlichen Komponenten eines erfindungsgemäßen Schwingungsmotors,
- Fig. 4: die rehzahlkennlinie eines erfindungsgemäßen Schwingungsmotors mit Resonanzdämpfung,
- Fig. 5: eine Ausführungsform eines erfindungsgemäßen Schwingungsmotors.
- Fig. 6: eine weitere Ausführungsform eines erfindungsgemäßen Schwingungsmotors.

Fig. 1 zeigt einen Ultraschallmotor, bei dem auf einer Grundplatte (1) ein Stator (2) mit Hilfe mehrerer Schrauben oder sonstiger Befestigungmittel befestigt ist. Gegen den Stator wird ein Rotor (3) mittels einer Tellerfeder (4) gedrückt. Der Ultraschallmotor ist koaxial um eine Antriebswelle (5) angeordnet. Am oberen Ende dieser Antriebswelle (5) ist die Tellerfeder (4) mittels eines Klemmrings fest angeordnet, der über Nietverbindung mit der Tellerfeder (4) fest verbunden ist und auf einem Ansatz der Antriebswelle (5) lagert. Die Antriebswelle (5) ist am unteren Ende drehbar an einem Rollenlager gelagert. Rotor und Stator sind vom einem zylindrischen Gehäuseteil umgeben.

Zur Erzeugung eines Antriebsmoments werden bei dem in Fig. 1 dargestellten Ultraschallmotor in bekannter Weise im Stator (2) Wanderwellen erzeugt, bei denen die materiellen Punkte der Statoroberfläche auf elliptischen Trajektorilen laufen und den reibschlüssig gekoppelten Rotor (3) in Bewegung setzen.

Fig. 2 zeigt die typische Drehzahlkennlinie eines bekannten Ultraschallmotors, wie er in Fig. 1 dargestellt ist. Die Drehzahl ist entlang der Ordinate aufgetragen, während entlang der Abszisse die Temperatur in °C aufgetragen ist. Es sind Kennlinien für Drehmomente von 5 Ncm(+), 50 Ncm(x) und 100 Ncm(y) gezeigt. Die Axialkraft zwischen Stator und Rotor ist konstant. Fig. 2 zeigt deutlich, daß bei größeren Drehmomenten in einem Temperaturbereich zwischen ca. 25 und 35°C die Drehzahlkennlinie einen Einbruch erleidet. In diesem Temperaturbereich tritt auch ein Pfeifen beim Betrieb des Motors auf. Solche parasitären Schwingungen im hörbaren Frequenzbereich treten insbesondere durch Anregung von Eigenschwingungen der Konstruktionselemente des Andruckmechanismus und des Rotors auf. Die Eigenfrequenzen können bei Konstruktion nach dem Stand der Technik temperaturabhängig sein und die gezeigte Temperaturabhängigkeit der Motoreigenschaften bewirken.

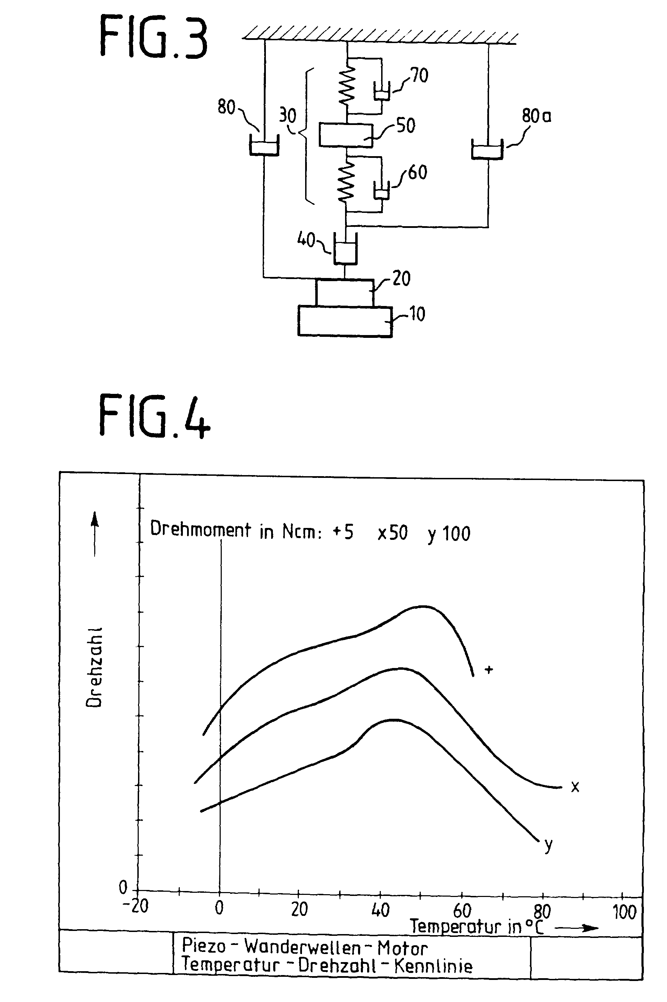

Fig. 3 zeigt eine schematische Darstellung eines erfindungsgemäßen Schwingungsmotors, bei dem eine Bedämpfung von parasitären, von der Frequenz der Arbeitsschwingung verschiedener Resonanzen erfolgt. In Fig. 3 bezeichnet 10 einen Schwingstator, 20 einen Rotor, 30 einen Federmechanismus zur Erzeugung eines Axialdrucks, der Rotor und Stator aneinanderpreßt und 40 bereits im Stand der Technik bekannte Dämpfungsmittel, z.B. einen Gummiring. 50 bezeichnet eine Masse zur Nachbildung der Resonanzfrequenz des aus Schwingstator, Rotor und Andruckfedern bestehenden Systems. Bei dem erfindungsgemäßen Motor sind zusätzlichlich Dämpfungsmittel 60, 70, 80 und 80a vorgesehen, um das System bei parasitären Resonanzfrequenzen zu dämpfen. Ohne die zusätzlichen Dämpfungsmittel 60, 70, 80, 80a oder andere im folgendenden noch dargestellte Mittel zur Unterdrückung bzw. Vermeidung dieser parasitären Resonanzen würde durch die bekannten Dämpfungsmittel 40 zwar eine Dämpfung bei der Anregefrequenz f₀, mit der das System betrieben wird, erreicht, jedoch nicht bei den parasitären Resonanzen, insbesondere bei solchen, bei denen der Rotor 20 und die Feder 30 gleichphasig schwingen.

Die Dämpfungsmittel 60, 70, 80 und 80a können auf verschiedene Weise realisiert werden, insbesondere durch die Wahl geeigneter Materialien für Andruckfeder und Rotor. Bei einer bevorzugten Ausführungsform wird die Andruckfeder aus einem dämpfenden Material hergestellt.

Fig. 4 zeigt die Drehzahlkennlinie eines erfindungsgemäßen Schwingungsmotors mit Resonanzdämpfung. Anstelle der bei dem Motor in Fig. 1 verwendeten Bronzefeder im Andruckmechanismus wurde bei dem erfindungsgemäßen Motor eine Feder aus einem Multilayer-Material verwendet. Die Auswirkung dieser Maßnahme ist eine im wesentlich erhaltene Kennlinie ohne Drehzahleinbruch und ein Verschwinden des Pfeifens im kritischen Temperaturbereich. Allgemein sind unter dem Aspekt der erfindungsgemäßen Dämpfung Materialien mit einem Dämpfungskoeffizient von mind. 0,005 als Federmaterial geeignet, wobei darauf zu achten ist, daß das Federmaterial darüberhinaus eine ausreichend hohe Temperaturfestigkeit besitzt. In Frage kommen insbesondere Epoxid-, Phenol-Polybismaleinimid- oder Silikonharz-Schichtpreßstoffe mit Papier oder Glasfilamentgewebe als Füllstoff. Auch Multilayer-Materialien mit Metallschichten, Kohlefasern, Aramidfasern oder ähnlichem kommen in Frage.

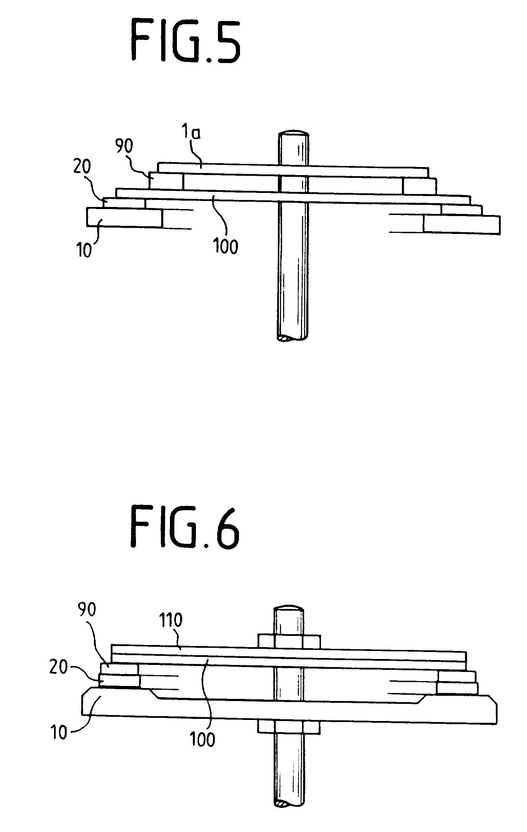

Fig. 5 zeigt eine weitere bevorzugte Ausführungsform eines erfindungsgemäßen Schwingungungsmotors. Mittels des Anpreßmechanismus 100 werden Stator 10 und Rotor 20 aneinander gepreßt, wobei das System Anpreßmechanismus 100-Rotor 20 durch das Dämpfungsmaterial 90 mit starker Dämpfung an die Masse 1a, z.B. eine Grundplatte hoher Steifigkeit, gekoppelt sind.

Fig. 6 zeigt eine Ausführungsform, bei der zusätzlich zu dem dämpfenden Material 90 auf der Feder 100 dämpfendes Material 110 aufgebracht ist. Hierfür kommen Lacke oder Kunststoffe in Frage.

Bei einer weiteren Ausführungsform der Erfindung besteht die Feder des Andruckmechanismus aus einem makroskopischen Multilayer-Material, bei dem Schichten aus federnden mit Schichten aus dämpfenden Material alternierend angeordnet sind.

Zusätzlich zur Dämpfung parasitärer Schwingungsmoden, können diese auch durch konstruktive Maßnahmen verlagert werden. Dies ist einerseits durch die Wahl eines Materials für Rotor bzw. Andruckmechanismus möglich, bei denen diese im Bereich der Betriebstemperatur ausreichend voneinander und vom Stator verschiedene Eigenfrequenzen aufweisen, andererseits dadurch, daß durch Löcher, Schlitze oder eine Lamellenstruktur die störenden Schwingungsformen zerstört werden. So können zum Beispiel radiale Schlitze, Bohrungen oder Löcher im Rotor realisiert werden, die in gleichem Abstand entlang eines Umfangs liegen und deren Anzahl der Anzahl der Knotengraden der gewünschten Schwingungsform im Stator entspricht. Bei einem Schwingungsmotor, der z.B. mit 9 Knotengraden arbeitet, wie in der DE 39 27 040 beschrieben worden ist, würde durch die Anordnung von 9 Löchern auf einem zum Mittelpunkt des kreissymmetrischen Rotors konzentrisch angeordneten Kreisring die Ausbildung der störenden Schwingungsmoden unterdrückt werden. Entsprechend kann in einer Tellerfeder die Ausbildung von Schwingungsmodi, die nicht Eigenschwingungen mit der Betriebsfrequenz des Stators entsprechen, verhindert werden.

## Patentansprüche

1. Schwingungsmotor, bestehend aus einem Stator (10), in dem Wanderwellen mit einer vorgegebenen Betriebsfrequenz erzeugt werden und einem unter Reibkontakt an den Stator (10) durch einen Andruckmechanismus (30) gepreßten Rotor (20),
**dadurch gekennzeichnet**,
daß das aus Rotor (20) und Andruckmechanismus (30) bestehende Schwingungssystem durch Dämpfungsmittel (60, 70, 80, 80a) so weit gedämpft wird, daß näherungsweise ein Betrieb im aperiodischen Grenzfall erfolgt.

2. Schwingungsmotor nach Anspruch 1,
dadurch gekennzeichnet,
daß Andruckmechanismus (30) und Rotor (20) aus hochdämpfendem Material mit einem Dämpfungskoeffizienten von mindestens 0,005 bestehen.

3. Schwingungsmotor nach einem der Ansprüche 1 oder 2,
dadurch gekennzeichnet,
daß als Andruckmechanismus (30) im wesentlichen eine aus einem Hartkunststoff mit hoher Dämpfung bestehende Tellerfeder vorgesehen ist.

4. Schwingungsmotor nach Anspruch 3,
dadurch gekennzeichnet,
daß als Hartkunststoff Epoxid, Phenol- oder Polibismaleinimid oder Silikonharz, Schichtpreßstoffe mit Papier-, Kohlefaser oder Glasfilamentgewebe vorgesehen sind.

5. Schwingungsmotor nach einem der Ansprüche 1 oder 2,
dadurch gekennzeichnet,
daß zwischen Andruckmechanismus (100) und einer axial angeordneten Grundplatte (1a) eine Schicht (90) aus dämpfendem Material vorgesehen ist.

6. Schwingungsmotor nach einem der Ansprüche 1, 2 oder 3,
dadurch gekennzeichnet,
daß als Andruckmechanismus eine Feder (100) vorgesehen ist, auf der eine dämpfende Schicht (110) aufgebracht ist.

7. Schwingungsmotor nach einem der Ansprüche 1 oder 2,
dadurch gekennzeichnet,
daß als Andruckmechanismus i. w. eine Feder, die aus makroskopischen Schichten aus elastischem und dämpfendem Material besteht, vorgesehen ist.

8. Schwingungsmotor nach Anspruch 1,
dadurch gekennzeichnet,
daß Löcher, Bohrungen, Schlitze, eine Lamellenstruktur und dergleichen bei Rotor (20) und/oder Andruckmechanismus (30) vorgesehen sind.

9. Schwingungsmotor nach Anspruch 1,
dadurch gekennzeichnet,
daß bei einem im wesentlichen aus einer Tellerfeder bestehenden Andruckmechanismus (30) Löcher, Bohrungen oder Schlitze vorgesehen sind, die auf einem zum Mittelpunkt des kreissymmetrischen Rotors konzentrisch angeordneten Kreisring in regelmäßigem Abstand angeordnet sind, und daß die Anzahl dieser Löcher, Bohrungen oder Schlitze der Anzahl der Knotengeraden der Wanderwellen entsprechen, mit denen der Betrieb des Motors erfolgt.

## Claims

1. Oscillation motor consisting of a stator (10), in which travelling waves with a predetermined operating frequency are produced, and a rotor (20) pressed under frictional contact against the stator (10) by a pressure mechanism (30), characterised thereby that the oscillation system consisting of rotor (20) and pressure mechanism (30) is damped by damping means (60, 70, 80, 80a) to such an extent that an operation approximately in the aperiodic boundary case takes place.

2. Oscillation motor according to claim 1, characterised thereby that the pressure mechanism (30) and rotor (20) consist of highly damping material with a damping coefficient of at least 0.005.

3. Oscillation motor according to one of claims 1 to 2, characterised thereby that substantially a plate spring consisting of a hard synthetic material with high damping is used as pressure mechanism (30).

4. Oscillation motor according to claim 3, characterised thereby that layered pressed materials of epoxide, phenol or polybismaleinimide or silicone resin and with paper, carbon fibre or glass fibre fabric are provided as hard synthetic material.

5. Oscillation material according to one of claims 1 or 2, characterised thereby that a layer (90) of damping material is provided between pressure mechanism (100) and an axially arranged base plate (1a).

6. Oscillation motor according to one of claims 1, 2 or 3, characterised thereby that a spring (100), on which a damping layer (110) is applied, is provided as pressure mechanism.

7. Oscillation motor according to one of claims 1, 2, or 3, characterised thereby that substantially a spring, which consists of macroscopic layers of elastic and damping material, is provided as pressure mechanism.

8. Oscillation motor according to claim 1, characterised thereby that holes, bores, slots, a laminated structure and the like are provided at rotor (20) and/or pressure mechanism (30).

9. Oscillation motor according to claim 1, characterised thereby that provided at a pressure mechanism (30), which substantially consists of a plate spring, are holes, bores or slots, which are arranged at uniform spacings on a circular ring arranged concentrically to the centre point of the circularly symmetrical rotor, and that the number of these holes, bores or slots correspond to the number of the node lines of the travelling waves, by which the operation of the motor takes place.

## Revendications

1. Moteur à vibrations comprenant un stator (10) dans lequel sont générées des ondes progressives à une fréquence de service préfixée et un rotor (20) pressé sous contact de frottement contre le stator (10) par un mécanisme presseur (30),
caractérisé en ce que le système oscillant formé du rotor (20) et du mécanisme presseur (30) est amorti, par des moyens d'amortissement (60, 70, 80, 80a), au point que le fonctionnement se déroule approximativement dans le cas limite apériodique.

2. Moteur à vibrations selon la revendication 1, caractérisé en ce que le mécanisme presseur (30) et le rotor (20) sont faits d'un matériau à fort pouvoir amortisseur, ayant un coefficient d'amortissement d'au moins 0,005.

3. Moteur à vibrations selons la revendication 1 ou 2, caractérisé en ce que le mécanisme presseur (30) est formé essentiellement d'une rondelle-ressort ou d'un ressort en forme de disque fait d'une matière plastique dure ayant un haut pouvoir d'amortissement.

4. Moteur à vibrations selon la revendication 3, caractérisé en ce que la matière plastique dure est une résine époxy, phénol-polybismaléinimide ou silicone ou une matière stratifiée comprimée contenant du papier, des fibres de carbone ou du tissu de filaments de verre.

5. Moteur à vibrations selon la revendication 1 ou 2, caractérisé en ce qu'une couche (90) de matériau d'amortissement est prévue entre le mécanisme presseur (100) et une plaque de base (10) agencée axialement.

6. Moteur à vibrations selon une des revendications 1, 2 ou 3, caractérisé en ce que le mécanisme presseur est un ressort (100) sur lequel est appliquée une couche d'amortissement (110).

7. Moteur à vibrations selon la revendication 1 ou 2, caractérisé en ce que le mécanisme presseur est formé essentiellement d'un ressort constitué de couches macroscopiques de matériau élastique et de matériau d'amortissement.

8. Moteur à vibrations selon la revendication 1, caractérisé en ce que des trous, des perçages, des fentes, une structure lamellaire ou des dispositions analogues sont prévus sur le rotor (20) et le mécanisme pressent (30).

9. Moteur à vibrations selon la revendication 1, caractérisé en ce qu'un mécanisme presseur (20) formé essentiellement d'une rondelle-ressort ou d'un ressort en forme de disque présente des trous, des perçages ou des fentes disposés à intervalles réguliers sur un cercle concentrique au centre du rotor à symétrie de révolution, et que le nombre de ces trous, perçages ou fentes correspond au nombre des degrés nodaux des ondes progressives avec lesquelles fonctionne le moteur.
